# EUROPÄISCHE PATENTSCHRIFT

(11) **EP 3 026 078 B1**
(45) Veröffentlichungstag und Bekanntmachung des Hinweises auf die Patenterteilung: **09.10.2019**
(21) Anmeldenummer: 15179620.8
(22) Anmeldetag: 04.08.2015
(51) Int. Cl.: C08L 15/02, C08L 27/12, C08L 27/16, C08K 3/36, C08K 3/04

(54) **KAUTSCHUKMISCHUNG UND SCHLAUCH ENTHALTEND DIE KAUTSCHUKMISCHUNG**
RUBBER COMPOSITION AND HOSE CONTAINING THE RUBBER COMPOSITION
MELANGE DE CAOUTCHOUC ET TUYAU COMPRENANT LE MELANGE DE CAOUTCHOUC

(30) Priorität: 25.11.2014 DE 102014223979
(43) Veröffentlichungstag der Anmeldung: 01.06.2016
(73) Patentinhaber: ContiTech MGW GmbH, 34346 Hannoversch-Münden (DE)
(72) Erfinder: Westenberg, Hauke, 50935 Köln (DE); Eckhardt, Kirsten, 34346 Hannoversch Münden (DE); Seibold, Sebastian, 34346 Hannoversch Münden (DE); Reinhard, Horst, 36382 Hauneck (DE)
(74) Vertreter: Preusser, Andrea

(56) Entgegenhaltungen:
- WO-A1-2011/068835
- US-A1- 2003 004 257
- US-A1- 2006 099 368
- DATABASE WPI Week 201438 Thomson Scientific, London, GB; AN 2014-K32351 XP002757007, & JP 2014 098132 A (MITSUBISHI RAYON CO LTD) 29. Mai 2014 (2014-05-29)
- DATABASE WPI Week 201349 Thomson Scientific, London, GB; AN 2013-L94275 XP002757008, & JP 2013 144380 A (DAIKIN KOGYO KK) 25. Juli 2013 (2013-07-25)

## Beschreibung

Die Erfindung betrifft eine Kautschukmischung und einen Schlauch, der wenigstens folgenden Schichtenaufbau aufweist:
- eine Innenschicht als Sperrschicht zu aggressiven Medien, die wenigstens einen Fluorkautschuk enthält und
- eine Außenschicht aus einer vernetzten Kautschukmischung.

Im einfachsten Fall ist der Schlauch ein Zwei-Lagen-Schlauch ohne eingebettete Festigkeitsträgerschicht, gebildet also ausschließlich aus einer Innenschicht und einer Außenschicht. In diesem Zusammenhang wird auf das Duplex-Extrusions-Verfahren verwiesen. Zumeist ist jedoch eine Festigkeitsträgerschicht, die ein- oder mehrlagig ausgebildet zwischen der Innenschicht und der Außenschicht angeordnet ist, vorhanden. Neben dem zweilagigen Grundaufbau und der Festigkeitsträgerschicht können noch weitere Schichten vorhanden sein.

Für die Innenschicht mit Sperrschichtfunktion gegenüber dem zu transportierenden Medium wird wegen seiner Medienbeständigkeit sowie hohen Temperaturbeständigkeit insbesondere eine Fluorkautschukmischung eingesetzt. Diese so genannten FKM-Mischungen, auch als FPM-Mischungen bezeichnet, können mit Polyolen und quartemären Ammoniumsalzen, wie bspw. in DE 43 11 549 A1 oder auch in EP 1 096 190 B1 beschrieben, oder bisphenolisch und dem quaternäres Phosphoniumsalz und / oder peroxidisch, wie bspw. in EP 1 396 670 B1 beschrieben, vernetzt sein. WO2011/068835A1 offenbart eine Fluorkautschuk-Zusammensetzung, welche sich in Kontakt mit Kraftstoffen befindet und die sich durch eine sehr niedrige Kraftstoff-Permeabilität auszeichnet. Um diese Kraftstoff-Permeabilität erreichen zu können, werden 10 bis 110 phr eines Polytetrafluorethylen-Mikropulvers bezogen auf das Fluor-Elastomer eingesetzt.

Die Auswirkungen dieser Mengen an Polytetrafluorethylen-Mikropulver auf den Weiterreißwiderstand und die dynamische Tüchtigkeit wird dort allerdings nicht diskutiert. In JP2014098132A wird zur Verbesserung der Flexibilität und chemischen Resistenz eines Schlauches eine separate Schicht aus Polytetrafluorethylen beschrieben.

Wichtig bei der Verwendung von Fluorkautschukmischungen, besonders bei dem Einsatz als Innenschicht in Schläuchen, ist ein guter Weiterreißwiderstand der Kautschukmischung.

Die Innenschicht soll als Sperrschicht gegen aggressive Medien, wie bspw. Säuren oder Kraftstoffe, wirken, so dass hierbei der Reißbeständigkeit, insbesondere dem Weiterreißwiderstand, eine große Bedeutung zukommt.

Eine übliche Methode zur Erhöhung des Weiterreißwiderstands ist die gezielte Untervernetzung der Mischung. Dabei werden bei bisphenolisch vernetzen Mischungen der Gehalt an Bisphenol und bei peroxidisch vernetzen Mischungen der Gehalt des organischen Peroxids und / oder der Gehalt an Co-Vernetzer, wie bspw. TAIC, TAC oder TRIM, reduziert. Dies führt allerdings zu signifikant verminderten Zugfestigkeiten.

Aus DE 10 2011 055 316 A1 ist bereits bekannt, dass die Verwendung von aktiven Füllstoffen in Fluorkautschukmischungen zu einer Verbesserung des Weiterreißwiderstandes führt. Durch die Zugabe von aktiven Füllstoffen, insbesondere aktiven Rußen, zu Fluorkautschukmischungen steigt allerdings die Viskosität und die Verarbeitung der Kautschukmischung wird dadurch schlechter.

Durch Hinzufügen von Kohlenstoffnanoröhren (CarboNanoTubes, CNT) zu den in DE 10 2011 055 316 A1 beschriebenen Fluorkautschukmischungen zeigen sich sowohl eine Verbesserung des Weiterreißwiderstandes als auch eine Verbesserung der Verarbeitbarkeit, siehe DE 10 2013 103 759 A1.

Im Allgemeinen korreliert der Weiterreißwiderstand einer Fluorkautschukmischung mit der dynamischen Tüchtigkeit. Schläuche, die die in DE 10 2011 055 316 A1 oder in DE 10 2013 103 759 A1 beschriebenen Kautschukmischungen enthalten, sind bei den Druckanforderungen der nächsten Motorengeneration nicht ausreichend dynamisch gut und deswegen nur begrenzt einsetzbar. Sie können den steigenden Anforderungen der immer mehr aufgeladenen Motoren nur bedingt standhalten.

Eine Aufgabe der vorliegenden Erfindung ist es daher, eine Kautschukmischung bereitzustellen, welche Fluorkautschuk enthält und die sich durch verbesserte dynamische Tüchtigkeit auszeichnet und gleichzeitig den Weiterreißwiderstand positiv beeinflusst.

Gelöst wird diese Aufgabe dadurch, dass die Kautschukmischung 50 bis 100 phr eines Fluorkautschuks oder 50 bis 100 phr eines Verschnitts aus zwei oder mehreren Fluorkautschuken und 0,05 bis 5 phr wenigstens eines Pulvers auf Basis wenigstens eines Fluorpolymers und wenigstens einen aktiven Ruß mit einer Iodzahl gemäß ASTM D 1510 zwischen 60 und 300 g /kg und einer DBP-Zahl gemäß ASTM D 2414 zwischen 60 und 150 cm³/100g enthält.

Überraschenderweise wurde gefunden, dass sich die dynamische Tüchtigkeit von Fluorkautschukmischungen weiterhin optimieren lässt, wenn die Kautschukmischung zusätzlich 0,05 bis 5 phr wenigstens eines Pulvers auf Basis wenigstens eines Fluorpolymers und wenigstens einen aktiven Ruß mit einer Iodzahl gemäß ASTM D 1510 zwischen 60 und 300 g /kg und einer DBP-Zahl gemäß ASTM D 2414 zwischen 60 und 150 cm³/100g enthält.

Erfindungsrelevant ist es, dass die Fluorkautschukmischung 0,05 bis 5 phr wenigstens ein Pulver auf Basis wenigstens eines Fluorpolymers enthält.

Es können alle der fachkundigen Person bekannten Fluorpolymere verwendet werden. Insbesondere die Verwendung von Pulver auf der Basis von Polytetrafluorethylen (PTFE) hat sich als besonders vorteilhaft erwiesen. PTFE-Pulver neigt zur Koagulation. Bei Einmischen des PTFE-Pulvers in die Kautschukmischung bilden sich längliche Agglomerate, die die dynamische Tüchtigkeit und überraschenderweise auch den Weiterreißwiderstand deutlich verbessern.

Die Teilchengröße des eingesetzten Fluorpolymerpulvers wird insbesondere durch Siebung auf bevorzugt 1 mm begrenzt.

Die Gesamtmenge an PTFE-Pulver beträgt bevorzugt 0,5 bis 4 phr und besonders bevorzugt 1 bis 3 phr.

Das Fluorpolymerpulver ist überraschenderweise medienbeständiger als der verwendete Fluorkautschuk und / oder die eingesetzten Füllstoffe. Die Medienbeständigkeit der Fluorkautschukmischung wird somit durch die Zugabe des Fluorpolymerpulvers, insbesondere bei Zugabe bis zu 1 phr, zusätzlich verbessert.

Erfindungsgemäß enthält die Kautschukmischung zusätzlich noch wenigstens einen aktiven Ruß mit einer Iodzahl gemäß ASTM D 1510 zwischen 60 und 300 g /kg und einer DBP-Zahl gemäß ASTM D 2414 zwischen 60 und 150 cm³/100g.

Die fachkundige Person unterscheidet zwischen aktiven Füllstoffen, die die Eigenschaften des Materials aufgrund von Wechselwirkungen mit dem oder den Polymeren, bedingt u.a. durch die reaktive Oberfläche dieser Füllstoffe z.B. durch polare Gruppen, beeinflussen und inaktiven Füllstoffen, die keine Einflüsse auf das Eigenschaftsbild der Kautschukmischung ausüben und praktisch nur zur Erhöhung des Volumens dienen.

Aktive Füllstoffe können beispielsweise aktive Ruße, Magnesiumcarbonat, aktive gefällte Kieselsäure, pyrogene Kieselsäure, kondensierte Kieselsäure, Calcium- und Aluminiumsilikate, Fasern (Kurz- und Langfasem, Glas-, Kohle-, Aramidfasem), Whisker (Aluminiumoxid, Siliziumcarbid), Glimmer, Zinkoxid, Kern/Mantel-Füllstoffe und weitere sein.

Die erfindungsgemäße Verwendung von aktivem Ruß hat sich als vorteilhaft hinsichtlich der Reißeigenschaften gezeigt. Ob ein Ruß als aktiv oder inaktiv bezeichnet wird, hängt im Wesentlichen von seiner spezifischen Oberfläche ab. Als aktiv werden gemäß Erfindung alle Ruße bezeichnet, welche einen Iodzahl, gemäß ASTM D 1510, die auch als Iodabsorptionszahl bezeichnet wird, zwischen 60 und 300 g/kg und eine DBP-Zahl, zwischen 60 und 150 cm³/100g besitzen. Die DBP-Zahl gemäß ASTM D 2414 bestimmt das spezifische Absorptionsvolumen eines Rußes oder eines hellen Füllstoffes mittels Dibutylphthalat. Dies bedeutet, dass Ruße mit der Kennung N-1xx, N-2xx oder auch N-3xx als aktive Ruße bezeichnet und verwendet werden. Die Kennung der Ruße erfolgt gemäß der Klassifizierungstabelle der ASTM D 1765-06.

Besonders gute Eigenschaften erzielen Ruße der N-2xx und der N-1xx Serien.

Die in der Kautschukindustrie eingesetzten Kieselsäuren sind in der Regel gefällte Kieselsäuren, die insbesondere nach ihrer Oberfläche charakterisiert werden. Auch hier ist eine direkte Korrelation zwischen aktiver Kieselsäure und der Oberfläche vorhanden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.

Werden Kieselsäuren in der Kautschukmischung verwendet, so haben diese vorzugsweise eine Stickstoff-Oberfläche (BET) zwischen 50 und 400 m²/g und eine CTAB-Oberfläche zwischen 100 und 300 m²/g.

Die Verwendung von CNTs ist ebenso möglich.

Die Gesamtmenge an aktiven Füllstoffen beträgt bevorzugt 2 bis 60 phr, besonders bevorzugt 5 bis 50 phr und ganz besonders bevorzugt 10 bis 40 phr.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Bevorzugt ist es, wenn die Kautschukmischung keine oder nur geringe Mengen an weiteren inaktiven Füllstoffen enthält, d.h. die Gesamtmenge an inaktiven Füllstoffen zwischen 0 und 40 phr, bevorzugt zwischen 0 und 20 phr, ganz besonders bevorzugt zwischen 0 und 10 phr, beträgt. Besonders bevorzugt ist es, wenn die Kautschukmischung frei von inaktiven Füllstoffen ist, d.h. die Gesamtmenge 0 phr beträgt. In die Gesamtmenge an inaktiven Füllstoffen wird hierbei die Menge an CNT nicht dazugerechnet. Zu den inaktiven Füllstoffen zählen insbesondere Kreide, Kieselgur, Tonerde-Gel, Asphalt, Hartgummistaub, anorganische und organische Pigmente, Glaskugeln, Kalkstein (CaCO₃), Kieselsäure (inaktiv), Ruß (inaktiv), Holzmehl, Nussschalenmehl, Kaolin, Feldspat und Talkum,

Als Fluorkautschuk können alle der fachkundigen Person bekannten Fluorkautschuke verwendet werden. Ebenso können die Copolymere, wie bespw. Poly(vinylidenfluorid-co-hexafluorpropylen) (VDF/HFP), Poly(vinylidenfluorid-co-hexafluorpropylen-co-tetrafluorethylen) (TFB), Poly(vinylidenfluorid-co-tetrafluorethylen-co-perfluormethylvinylether) (VDF/TFE/PMVE), Poly(tetrafluorethylen-co-propylen) (TFE/P) und Poly(vinylidenfluorid-co-chlortrifluorethylen) (VDF/CTFE) verwendet werden. Der in der Fluorkautschukmischung eingesetzte Fluorkautschuk ist vorzugsweise ein Co-Polymer oder Ter-Polymer, wobei der Fluoranteil 50 bis 72 % beträgt.

Der Fluorkautschuk kann einzeln oder im Verschnitt mit wenigstens einem weiteren Fluorkautschuk, wie bspw. Fluorsilikon, Polytetrafluorethylen (PTFE) oder Perfluorethylenpropylen (FEP), eingesetzt werden.
Die Gesamtmenge an Fluorkautschuk beträgt erfindungsgemäß 50 bis 100 phr, bevorzugt 70 bis 100 phr, besonders bevorzugt 90 bis 100 phr.
Weniger als 50 phr bedeutet zumeist eine Reduzierung der Wärmebeständigkeit, was für die meisten Anwendungen, insbesondere für Schläuche im Automobilbereich, dann nicht mehr den Anforderungen entsprechen würde.

Die Kautschukmischung kann aber wenigstens einen weiteren Kautschuk enthalten.
Hier haben sich insbesondere zur Anwendung im Bereich der Schläuche Nitrilkautschuk, hydrierter Nitrilkautschuk, hydrierter Acrylnitrilbutadienkautschuk, Chloroprenkautschuk, Butylkautschuk, Halobutylkautschuk, Chloropolyethylenkautschuk oder Ethylen-Propylen-Dien-Kautschuk als geeignet gezeigt.

Die Kautschukmischung enthält noch weitere Zusatzstoffe, wie das Vernetzungssystem, umfassend ein Vemetzungsmittel und einen Beschleuniger. Je nach der Art der Kautschukmischung, die bei einem mehrschichtigen Schlauch verschiedenartig sein kann, umfassen die Mischungsingredienzien noch ein Verarbeitungshilfsmittel und/oder einen Weichmacher und/oder ein Alterungsschutzmittel sowie gegebenenfalls weitere Zusatzstoffe, beispielsweise Fasern und Farbpigmente. Verarbeitungshilfsmittel können insbesondere Carnaubawachse, Pentaerythrityltetrastearate, Seifen, Fettsäureester, Phosphorsäureester, Borsäureester, Säureamide, aliphatische und olefinische Wachse und aliphatische und olefinische Amine oder deren Gemische sein. Durch eine zielgerichtete Verwendung dieser Verarbeitungshilfsmittel wird die Verarbeitbarkeit durch Viskositätserniedrigung gewährleistet.
Die Vernetzung kann bisphenolisch, peroxidisch oder auch bisaminisch erfolgen. Auch Mischformen dieser Vernetzungsarten sind möglich.

Eine weitere Aufgabe der Erfindung besteht darin, einen Schlauch bereitzustellen, dessen Innenschicht sich durch eine verbesserte dynamische Tüchtigkeit auszeichnet, bei gleichzeitig optimiertem Weiterreißwiderstand.

Gelöst wird diese Aufgabe dadurch, dass der Schlauch eine Innenschicht als Sperrschicht zu aggressiven Medien besitzt, die aus einer Kautschukmischung enthaltend 50 bis 100 phr eines Fluorkautschuks oder 50 bis 100 phr eines Verschnitts aus zwei oder mehreren Fluorkautschuken und 0,05 bis 5 phr wenigstens eines Pulvers auf Basis wenigstens eines Fluorpolymers und wenigstens einen aktiven Ruß mit einer Iodzahl gemäß ASTM D 1510 zwischen 60 und 300 g /kg und einer DBP-Zahl gemäß ASTM D 2414 zwischen 60 und 150 cm³/100g aufgebaut ist. Des Weiteren besitzt der Schlauch eine Außenschicht aus einer vernetzten Kautschukmischung.

Bezüglich der Zusammensetzung der Kautschukmischung, vor allem hinsichtlich des Fluorkautschuks, des Fluorpolymer-Pulvers, des aktiven Rußes und der weiteren Bestandteile, gelten die bereits weiter oben erfolgten Ausführungen zu der erfindungsgemäßen Kautschukmischung.

Der erfindungsgemäße Schlauch kann extrudiert oder gewickelt sein und besteht im einfachsten Fall aus zwei Lagen, nämlich einer Außenschicht und einer Innenschicht.

Es ist aber auch möglich, dass noch zusätzliche Schichten vorhanden sind. Dies können Zwischenschichten und / oder Festigkeitsträgerschichten sein.

Auch ein Drei-Lagen-Schlauch, bestehend aus einer Innenschicht, Festigkeitsträgerschicht und Außenschicht, wird häufig eingesetzt.

Der Schlauch kann ebenfalls aus einer extrudierten Innenschicht und einer oder mehreren gewickelten Außenschichten bestehen, wie sie bspw. in WO 2014/121876A1 beschrieben sind.

Bezüglich der Außenschicht und der weiteren möglichen Schichten werden nun bevorzugte Varianten dargestellt, wobei folgende Abkürzungen gelten:
FKM (Fluorkautschuk), ACM (Acrylat-Kautschuk), AEM (Ethylen-Acrylat-Kautschuk),
EPM (Ethylen-Propylen-Kautschuk (Mischpolymerisat)), EPDM (Ethylen-Propylen-DienKautschuk (Mischpolymerisat)), ECO (Epichlorhydrinkautschuk), VMQ (Silikonkautschuk).

### Außenschicht

Die Kautschukkomponente der Kautschukmischung ist vorzugsweise FKM, ACM, AEM, EPM, EPDM, ECO oder VMQ oder ein Verschnitt der vorgenannten Kautschukkomponenten mit wenigstens einer weiteren Kautschukkomponente, beispielsweise ein AEM/EPDM-Verschnitt. Zumeist werden jedoch verschnittfreie Kautschukmischungen eingesetzt.

Da an die Außenschicht andere Anforderungen gestellt werden als an die Innenschicht, muss hier nicht die Fluorkautschukmischung der Innenschicht verwendet werden. Häufig genügen hier die FKM-Standardmischungen nach dem Stand der Technik. Hat auch die Außenschicht Kontakt zu einem sauren Medium oder ist diese extrem thermisch oder dynamisch belastet, so bietet sich dann jedoch die gleiche Lösung an wie für die Innenschicht,

Kautschukmischungen auf der Basis von ACM und oder AEM werden insbesondere diaminisch vernetzt.

Kautschukmischungen auf der Basis von EPM, EPDM sowie VMQ werden wiederum bevorzugt peroxidisch vernetzt.

### Festigkeitsträgerschicht

Die Festigkeitsträgerschicht ist aus einem Gewebe, Gewirke oder Gestrick gebildet, insbesondere auf der Basis eines textilen Werkstoffes. Die diesbezüglichen Werkstoffe können Polyamid (PA), Polyimid (PI), Aramid, insbesondere para-Aramid oder meta-Aramid, Polyvinylacetal (PVA), Polyetheretherketon (PEEK), Polyester, insbesondere Polyethylentherephthalat (PET) oder Polyethylen-2,6-naphthalat (PEN), Polysulfon (PSU), Polyoxadiazol (POD), Polyphenylen oder Polyphenylenderivat, insbesondere Polyphenylensulfid (PPS), oder Glasfasern sein. Auch Hybridkonzepte, d.h. Mischformen der genannten, können zum Einsatz gelangen, beispielsweise in Form eines Mischzwims aus m- und p-Aramid oder aus PPS und PA. Das PPS als Hochleistungswerkstoff trägt zu einer hohen Festigkeit bei, während das PA neben dem Festigkeitsträgerbeitrag auch über seine Haftaktivierbarkeit zu einer verbesserten Haftung gegenüber dem umgebenden elastomeren Werkstoff beiträgt.

### Zwischenschicht

Die Zwischenschicht kann zum Teil auch als Haftschicht zwischen der Innenschicht und der Festigkeitsträgerschicht verwendet werden. Die Kautschukkomponente der Kautschukmischung der Zwischenschicht ist vorzugsweise analog der Kautschukkomponente der Außenschicht, besonders bevorzugt ist hierbei VMQ oder ein Verschnitt der vorgenannten Kautschukkomponenten mit wenigstens einer weiteren Kautschukkomponente. Zumeist werden jedoch verschnittfreie Kautschukmischungen eingesetzt.

Eingesetzt wird der erfindungsgemäße Schlauch insbesondere für luftführende Schläuche, wie beispielsweise Ladeluftschläuche, Rußpartikelfilterschläuche, Dieselpartikelfilterschläuche, Steuerschläuche, aber auch für Kraftstoffschläuche oder Ölschläuche, wie bspw. Schläuche zum Transport von Schmier- und Kühlungsmittel an Turboladern.

Die Erfindung soll nun anhand von Vergleichs- und Ausführungsbeispielen, die in der Tabelle 1 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

Im jeweils oberen Teil der Tabellen ist dabei die Mischungszusammensetzung dargestellt, während jeweils im unteren Teil der Tabellen die dazugehörigen entsprechenden physikalischen Eigenschaften illustriert sind.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

**Tabelle 1a**

| **Bestandteile** | **Einheit** | **V1** | **V2** | **E1** | **E2** | **E3** | **E4** | **E5** |
|---|---|---|---|---|---|---|---|---|
| FKM^{a} | phr | 100 | 100 | 100 | 100 | 100 | 100 | 100 |
| Ruß, N-220 | phr | 10,6 | 10,0 | 10,6 | 10,6 | 10,6 | 10,6 | 10,6 |
| Kiesclsäure | phr | 8,0 | 8,0 | 8,0 | 8,0 | 8,0 | 8,0 | 8,0 |
| CNT | phr | -- | 1,0 | -- | -- | -- | -- | -- |
| Verarbeitungshilfe ^{b} | phr | 2,2 | 2,2 | 2,2 | 2,2 | 2,2 | 2,2 | 2,2 |
| PTFE A | phr | -- | -- | 2,0 | -- | -- | -- | -- |
| PTFE B | phr | -- | -- | -- | 1,5 | 2 | 3,5 | 5 |
| TAIC 70% | phr | 3,7 | 3,7 | 3,7 | 3,7 | 3,7 | 3,7 | 3,7 |
| Organ, Peroxide 45% | phr | 1,8 | 1,8 | 1,8 | 1,8 | 1,8 | 1,8 | 1,8 |

| | | | | | | | | |
|---|---|---|---|---|---|---|---|---|
| ^{a} peroxidisches Co-Polymer, 66 Gew. -% Fluor ^{b} (Carnaubawachs, Pentaerithrittetrastearat) | | | | | | | | |

**Tabelle 1b**

| **Bestandteile** | **Einheit** | **V1** | **V2** | **E1** | **E2** | **E3** | **E4** | **E5** |
|---|---|---|---|---|---|---|---|---|
| Dichte DIN EN ISO 1183-1 | g/cm³ | 1,75 | 1,75 | 1,75 | 1,74 | 1,75 | 1,75 | 1,76 |
| Härte DIN 53505 | Shore A | 75 | 81 | 76 | 77 | 77 | 79 | 78 |
| Zugfestigkeit DIN 53504 S3A | N/mm² | 19,3 | 21,5 | 17,5 | 15,2 | 19,2 | 17,5 | 16,9 |
| Bruchdehnung DIN 53504 S3A | % | 640 | 510 | 780 | 620 | 740 | 720 | 740 |
| Weiterreißwiderstand DIN ISO 34-1A | N/mm | 14,6 | 22,8 | 23,7 | 19 | 29,7 | 32,7 | 31,6 |

Aus der Tabelle 1b ist zu erkennen, dass durch die Verwendung von PTFE-Pulver in dem erfindungsgemäßen Mengenbereich sich nicht nur die dynamische Tüchtigkeit, sondern sich auch der Weiterreißwiderstand überraschend weiter verbessern lässt.

Der Erfindung wird nun anhand eines Ausführungsbeispiels unter Bezugnahme auf eine schematische Zeichnung weiter erläutert.

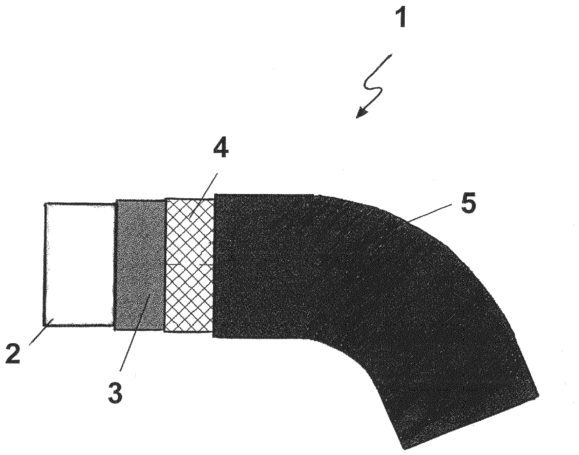

Die einzige Figur zeigt einen Schlauch 1, der als Krümmerschlauch ausgebildet ist. Der Schlauch weist dabei folgenden Schichtenaufbau mit folgender beispielhafter Werkstoffkonzeption auf:

| | |
|---|---|
| Innenschicht 2: | peroxidisch vernetzte Fluorkautschukmischung, die wenigstens einen Fluorkautschuk und Pulver auf Basis wenigstens eines Fluorpolymers enthält |
| Zwischenschicht 3: | peroxidisch vernetzte und verschnittfreie VMQ-Kautschukmischung |
| Festigkeitsträgerschicht 4: | Textilfäden aus Aramid |
| Außenschicht 5: | peroxidisch vernetzte und verschnittfreie VMQ-Kautschukmischung |

### Bezugszeichenliste

### (Teil der Beschreibung)

- 1: Schlauch
- 2: Innenschicht (Sperrschicht)
- 3: Zwischenschicht
- 4: Festigkeitsträgerschicht
- 5: Außenschicht

## Patentansprüche

1. Kautschukmischung, **dadurch gekennzeichnet, dass** sie 50 bis 100 phr eines Fluorkautschuks oder 50 bis 100 phr eines Verschnitts aus zwei oder mehreren Fluorkautschuken und 0,05 bis 5 phr wenigstens eines Pulvers auf Basis wenigstens eines Fluorpolymers und wenigstens einen aktiven Ruß mit einer Iodzahl gemäß ASTM D 1510 zwischen 60 und 300 g /kg und einer DBP-Zahl gemäß ASTM D 2414 zwischen 60 und 150 cm³/100g enthält.

2. Kautschukmischung nach Anspruch 1, **dadurch gekennzeichnet, dass** das Pulver auf Basis wenigstens eines Fluorpolymers ein Pulver auf Basis von PTFE ist.

3. Kautschukmischung nach Anspruch 2, **dadurch gekennzeichnet, dass** die Partikelgröße des PTFE-Pulvers nach dem Sieben kleiner oder gleich 1mm beträgt.

4. Kautschukmischung nach einem der Ansprüche 1 bis 3, **dadurch gekennzeichnet, dass** sie zusätzlich 0 bis 40 phr inaktive Füllstoffe enthält.

5. Schlauch (1) **gekennzeichnet durch** wenigstens folgenden Schichtenaufbau:
- eine Innenschicht (2) als Sperrschicht zu aggressiven Medien, die 50 bis 100 phr eines Fluorkautschuks oder 50 bis 100 phr eines Verschnitts aus zwei oder mehreren Fluorkautschuken und 0,05 bis 5 phr wenigstens eines Pulvers auf Basis wenigstens eines Fluorpolymers und wenigstens einen aktiven Ruß mit einer Iodzahl gemäß ASTM D 1510 zwischen 60 und 300 g /kg und einer DBP-Zahl gemäß ASTM D 2414 zwischen 60 und 150 cm³/100g enthält und
- eine Außenschicht (5) aus einer vernetzten Kautschukmischung.

6. Schlauch (1) nach Anspruch 5, **dadurch gekennzeichnet, dass** dieser frei von einer Festigkeitsträgerschicht ausschließlich aus einer Innenschicht und Außenschicht besteht.

7. Schlauch (1) nach Anspruch 5, **dadurch gekennzeichnet, dass** zwischen der Innenschicht (2) und der Außenschicht (5) eine Festigkeitsträgerschicht (4) angeordnet ist, die ein- oder mehrlagig ausgebildet ist.

8. Schlauch nach einem der Ansprüche 5 bis 7, **dadurch gekennzeichnet, dass** das Pulver auf Basis wenigstens eines Fluorpolymers ein Pulver auf Basis von PTFE ist.

## Claims

1. Rubber mixture, **characterized in that** it contains 50 to 100 phr of a fluororubber or 50 to 100 phr of a blend of two or more fluororubbers and 0.05 to 5 phr of at least one powder based on at least one fluoropolymer and at least one active carbon black having an iodine number according to ASTM D 1510 between 60 and 300 g/kg and a DBP number according to ASTM D 2414 between 60 and 150 cm³/100 g.

2. Rubber mixture according to Claim 1, **characterized in that** the powder based on at least one fluoropolymer is a powder based on PTFE.

3. Rubber mixture according to Claim 2, **characterized in that** the particle size of the PTFE powder after sieving is not more than 1 mm.

4. Rubber mixture according to any of Claims 1 to 3, **characterized in that** it additionally contains 0 to 40 phr of inactive fillers.

5. Hose (1) **characterized by** at least the following layer construction:
- an inner layer (2) as a barrier layer to aggressive media which contains 50 to 100 phr of a fluororubber or 50 to 100 phr of a blend of two or more fluororubbers and 0.05 to 5 phr of at least one powder based on at least one fluoropolymer and at least one active carbon black having an iodine number according to ASTM D 1510 between 60 and 300 g/kg and a DBP number according to ASTM D 2414 between 60 and 150 cm³/100 g and
- an outer layer (5) composed of a crosslinked rubber mixture.

6. Hose (1) according to Claim 5, **characterized in that** it is free from a strength member layer and consists exclusively of an inner layer and an outer layer.

7. Hose (1) according to Claim 5, **characterized in that** arranged between the inner layer (2) and the outer layer (5) is a single- or multi-ply strength member layer (4).

8. Hose according to any of Claims 5 to 7, **characterized in that** the powder based on at least one fluoropolymer is a powder based on PTFE.

## Revendications

1. Mélange de caoutchouc, **caractérisé en ce qu'**il contient 50 à 100 pce d'un caoutchouc fluoré ou 50 à 100 pce d'un mélange de deux ou davantage de caoutchoucs fluorés et 0,05 à 5 pce d'au moins une poudre à base d'au moins un polymère fluoré et d'au moins un noir de carbone actif ayant un indice d'iode selon ASTM D 1510 compris entre 60 et 300 g/kg et un indice DBP selon ASTM D 2414 compris entre 60 et 150 cm³/100 g.

2. Mélange de caoutchouc selon la revendication 1, **caractérisé en ce que** la poudre à base d'au moins un polymère fluoré est une poudre à base de PTFE.

3. Mélangé de caoutchouc selon la revendication 2, **caractérisé en ce que** la taille de particule de la poudre de PTFE après le tamisage est inférieure ou égale à 1 mm.

4. Mélange de caoutchouc selon l'une quelconque des revendications 1 à 3, **caractérisé en ce qu'**il contient en outre 0 à 40 pce de charges inactives.

5. Tuyau (1), **caractérisé par** au moins la structure de couches suivante :
- une couche intérieure (2) en tant que couche de barrière contre les milieux agressifs, qui contient 50 à 100 pce d'un caoutchouc fluoré ou 50 à 100 pce d'un mélange de deux ou davantage de caoutchoucs fluorés et 0,05 à 5 pce d'au moins une poudre à base d'au moins un polymère fluoré et d'au moins un noir de carbone actif ayant un indice d'iode selon ASTM D 1510 compris entre 60 et 300 g/kg et un indice DBP selon ASTM D 2414 compris entre 60 et 150 cm³/100 g, et
- une couche extérieure (5) en un mélange de caoutchouc réticulé.

6. Tuyau (1) selon la revendication 5, **caractérisé en ce que** celui-ci, exempt d'une couche de renfort, est exclusivement constitué par une couche intérieure et une couche extérieure.

7. Tuyau (1) selon la revendication 5, **caractérisé en ce qu'**une couche de renfort (4), qui est configuré à une ou plusieurs couches, est agencée entre la couche intérieure (2) et la couche extérieure (5).

8. Tuyau selon l'une quelconque des revendications 5 à 7, **caractérisé en ce que** la poudre à base d'au moins un polymère fluoré est une poudre à base de PTFE.
